# EUROPEAN PATENT SPECIFICATION

(11) **EP 0 756 120 B1**
(45) Date of publication and mention of the grant of the patent: **04.10.2000**
(21) Application number: 96305169.3
(22) Date of filing: 15.07.1996
(51) Int. Cl.: F16L 21/00

(54) **Pipe coupling**
Rohrverbindung
Raccord de tuyaux

(30) Priority: 24.07.1995 GB 9515104
(43) Date of publication of application: 29.01.1997
(73) Proprietor: Taylor Kerr (Couplings) Limited, London W1R 7LF (GB)
(72) Inventor: Webb, Ian Richard, Gerrards Cross, Buckinghamshire SL9 7LQ (GB); Taylor, Neil John Thornton, Rickmansworth, Hertfordshire WD3 2HA (GB); Taylor, William, Pinner, Middlesex (GB)
(74) Representative: Brereton, Paul Arthur

(56) References cited:
- EP-B- 0 205 896
- CH-A- 392 171
- GB-A- 2 249 366
- US-A- 3 365 219

## Description

The present invention relates to pipe couplings for connecting together two pipes in a fluid-tight manner of the type comprising a tubular casing formed with a longitudinal gap, a sealing sleeve of resilient flexible material arranged within the casing, and tensioning means for reducing the width of the longitudinal gap. In use, the sealing sleeve is placed around the adjacent pipe ends and the tensioning means are tightened to clamp the sleeve against the outer surfaces of the pipe ends to form a fluid tight seal.

In our patent application GB-A-2 249 366 we described a pipe coupling for connecting together two plain-ended pipes in a fluid-tight manner comprising of a tubular casing, a tubular sealing sleeve, and tensioning means for tightening the casing about the sealing sleeve. At each end the sealing sleeve has a circumferential slot in its outer surface and a gripping ring with inwardly projecting gripping teeth is located in each slot. Tightening the tensioning means causes the sealing sleeve to be pressed into sealing engagement with the pipe ends and the gripping teeth of the gripping rings to penetrate the bottoms of the slots and to engage the outer surfaces of the pipe ends.

The gripping teeth bite into the surface of the pipe to provide an anchoring effect against the axial load. The teeth are designed to make contact at approximately 5mm centres around the circumference with a width of approximately 2mm for each tooth, giving approximately 40% contact around the periphery of the pipe. The coupling has proved to be very successful in connecting together pipes made of hard materials such as steel. However there are applications for pipe couplings where the coupling has to withstand high axial loads and where the pipes are made of relatively soft material such as polyethylene or other polymeric materials. Many polymeric materials exhibit cold flow, that is creep at an appreciable rate at ambient temperatures, a characteristic which is not to be found in, say, steel. Accordingly, even if a pipe of polymeric material is sufficiently resilient to withstand the initial biting pressure of the gripping ring, there is a tendency for the pipe wall to thin in response to the applied pressure leading to premature failure. Furthermore, as the pipe wall thins, the biting pressure may drop to a point where the coupling is no longer able to withstand the axial forces produced by the hydrostatic pressure within the pipeline.

An alternative pipe coupling for use with polymeric materials is described in European patent EP-B- 0 205 896. The coupling includes a spiked ring which is fitted to the inside diameter of the coupling, in contact with a truncated anchoring ring and a side flange of the casing. The housing of the coupling is adjustable, enabling the spiked ring to be pressed into contact with the periphery of a pipe. However, once tightened around the pipe, changes in the pipe profile due to cold flow, and other factors such as ageing and climatic variations, are likely to diminish the initial gripping pressure exerted on the pipe by the spiked ring. Additionally, this coupling has a pressure sensitive "C" shaped gasket adjacent to the spiked ring. When the gasket swells in response to pressure in the pipe, the casing and gripping device will be pushed radially outwards away form the pipe, lessening the gripping pressure. Any drop in the gripping pressure reduces the ability of the pipe and coupling to withstand axial tension, which in turn is likely to lead to premature failure.

In accordance with the present invention in a first aspect, there is provided a pipe coupling for connecting in a fluid-tight manner to the end of a pipe, as defined in claim 1.

We have discovered that by replacing the rigidly mounted spiked ring in the prior art with a gripping ring capable of flexing in an axial direction, a better coupling for use with pipes of relatively soft polymeric material is attainable.

In use, the gripping ring increases the gripping pressure on the pipe in response to any forces tending to separate the coupling from the casing, thereby resisting "pull-out". The gripping force exerted by the gripping ring on the pipe may be described as active, compensating for changes in the instantaneous load on the connection between the pipe and coupling. This is a great advantage over the loading produced by the spiked ring in the prior art which does nothing to compensate for changing load conditions.

This invention will work equally well irrespective of whether the axial tension between the pipe and coupling is generated by internal hydrostatic pressure or by the influence of an external force when the pipe is in use or being installed.

The gripping ring has a generally cylindrical inner surface which, in use, presents a large contact area to the periphery of the pipe. This reduces the biting pressure, spreading the gripping force over a larger area. The absence of sharp teeth prevents the gripping ring penetrating into the pipe to too great a depth, typically no more than 10% of the overall wall thickness. The gripping surface may of course be roughened to encourage frictional forces which will reduce the tendency for the pipe to slide axially relative to the coupling.

Preferably, a gripping ring is provided at each end of the coupling. The gripping ring is preferably frusto-conical, and incomplete to enable the ring to be expanded or compressed. In an especially preferred form, the gripping ring is made from sheet material with the gripping surface set at an angle to the surface of the sheet such that the width of the gripping surface in an axial direction is greater than the thickness of the sheet.

The coupling may have a plurality of gripping rings arranged side by side so as to increase the potential gripping surface area available for engaging a pipe. A similar increase in the potential gripping surface area can be achieved by using a helical gripping ring with multiple turns in place of a plurality of gripping rings.

In either case, the length of the gripping surface which in use, makes contact with the surface of the pipe will preferably exceed the circumference of the pipe.

The casing may comprise an inner casing and an outer casing, with the inner casing fitting within the outer. In a preferred arrangement, both the inner and outer casings have longitudinal gaps, the gap in the inner casing being circumferentially offset from the gap in the outer casing so that the sealing sleeve is supported by one or other casing around its entire periphery. In an especially preferred arrangement, the axial end margins of the outer casing are bent inwardly to form radial flanges.

In accordance with a second aspect of the invention, there is provided an assembly of a pipe coupling connected in a fluid-tight manner to the end of a pipe, as defined in claim 10.

In the assembly, the gripping surface and the sealing sleeve are preferably in contact with the pipe at circumferential locations of substantially equal radii. Typically, the gripping ring should not penetrate to a depth of more than 10% of the pipe wall thickness. Therefore, in the coupling prior to tightening the tensioning means, it is preferred if the radially innermost surface of the sealing sleeve is flush with or projects radially inward of the gripping surface of the gripping ring. In this way, the gripping ring will not engage the pipe surface before the sealing sleeve, reducing any tendency for the gripping ring to penetrate too far into the pipe.

An embodiment of the invention will now be described, by way of example, with reference to the accompanying drawings, of which:

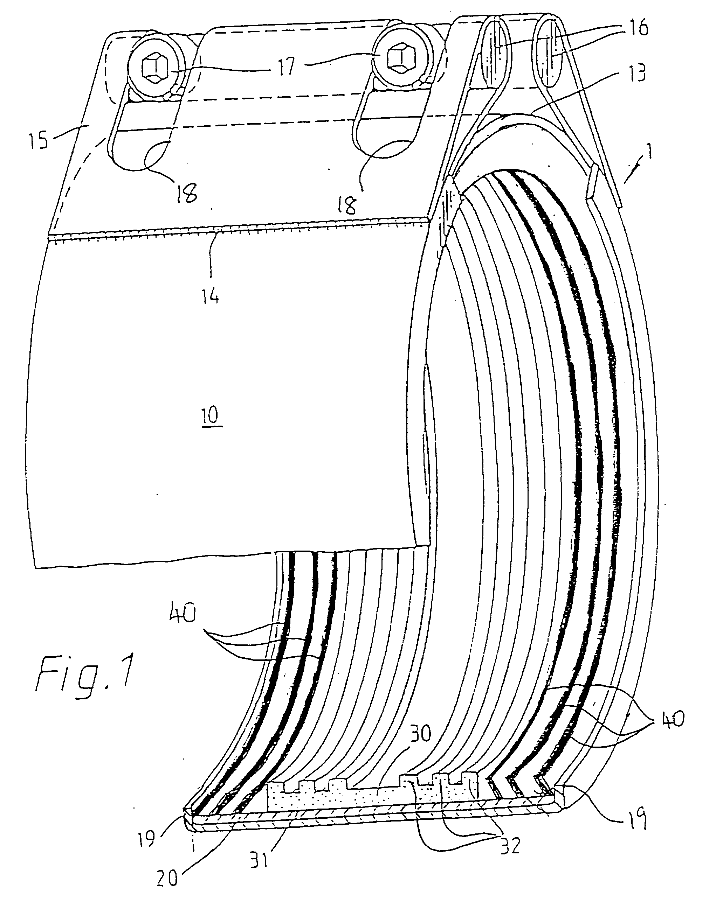

Figure 1 shows a perspective cut away view of a coupling in accordance with the invention;

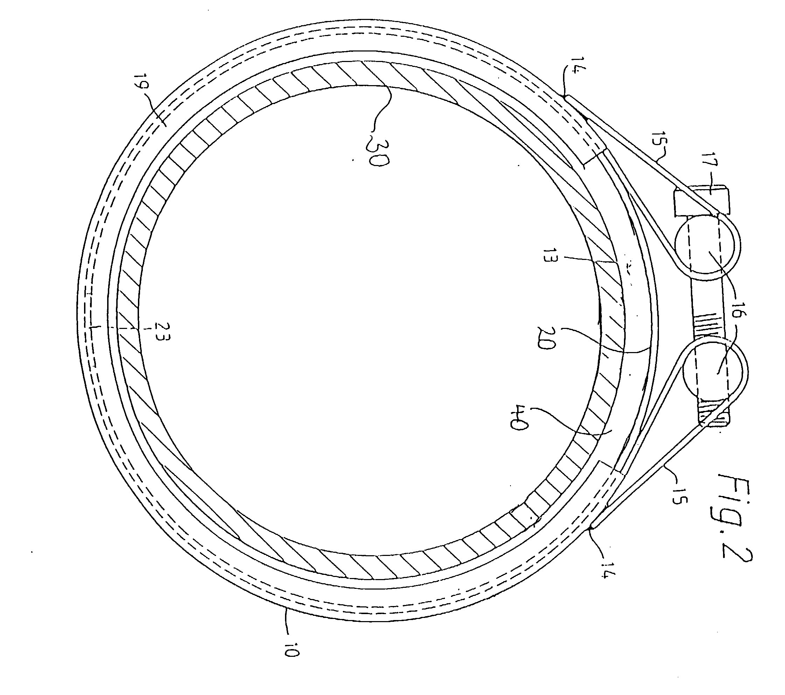

Figure 2 shows an end view of the coupling of figure 1;
Figure 3 shows a longitudinal section through an assembly using the coupling of figure 1;
Figure 4 shows a perspective view of a gripping ring in the coupling of figures 1 to 3, and

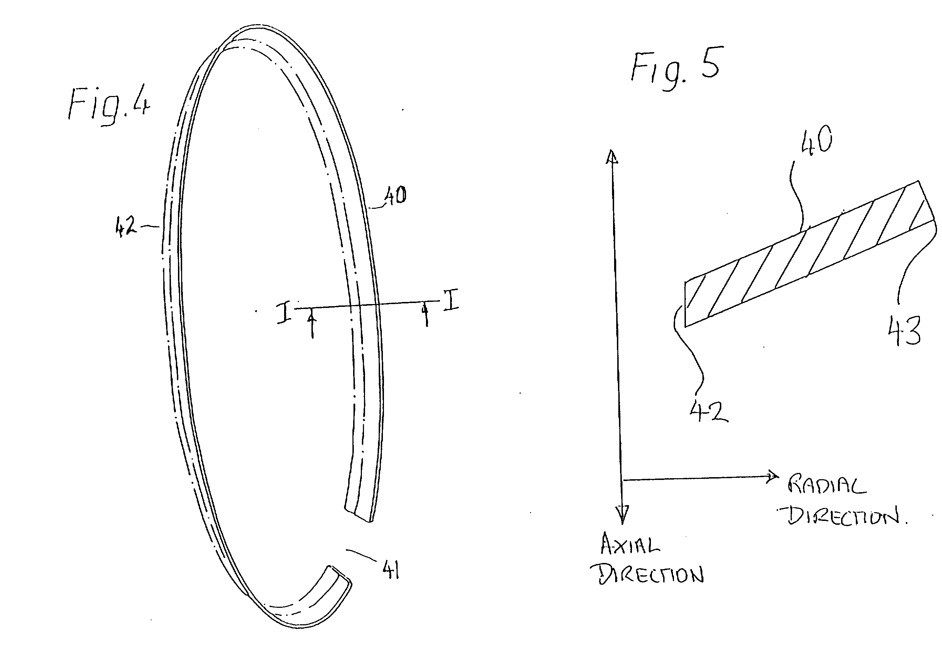

Figure 5 shows a radial section along the line I-I through the gripping ring of figure 4.

A pipe coupling 1 comprises an outer tubular casing 10 an inner tubular casing 20 and a sealing gasket 30. The outer tubular casing 10 is formed of rolled steel, with a longitudinal gap 13. The casing is folded back on itself at its free ends and welded at 14 to form loops 15 along opposite edges of the longitudinal gap 13. Pins 16 are inserted in the loops. Tensioning screws 17 pass through transverse holes in one of the pins 16 into tapped transverse holes in the other of the pins 16, so as to interconnect the two free ends of the outer casing. Slots 18 are cut in the loops 15 so as to provide clearance for the screws. The axial ends margins of the casing 10 are bent inwardly at right angles to from radial flanges 19.

The inner tubular casing 20 is of rolled steel and has a longitudinal gap 23. The casing 20 fits inside the outer casing 10, the axial length of the casing 20 being slightly less than that of the casing 10 so that it is a snug fit inside and, in use, is supported laterally by the flanges 19.

The sealing gasket 30 is of rubber formed from a length of flat extrusion which is rolled into a tube and joined by welding to form a complete cylinder. Alternatively, the rubber gasket may be moulded. The outer surface 31 of the gasket is smooth but the inner surface is formed with two sets of annular sealing ribs 32 which project inwardly and have a substantially square profile. In the present embodiment there are three ribs in each set. The gasket 30 fits inside the casing 20, being shorter in a axial direction than the inner casing such that the gasket 30 is axially spaced from the flanges. In use, the ribs 32 are compressed to form a seal with the surface of the pipe.

A gripping device is provided at each end of the casing 10, in the spaces between the sealing gasket 30 and flanges 19. In the coupling illustrated, each gripping device consists of three frusto-conical rings 40, arranged side by side along the axis of the coupling. The rings are made from sheet steel and are incomplete, having radial gaps 41 so that they are of adjustable diameter. Each ring 40 has a generally cylindrical gripping surface 42 on its radially inner periphery. The gripping surface 12 roughened, milled or knurled to increase frictional contact with the periphery of a pipe.

Each frusto-conical ring 40 slopes toward the centre of the coupling, being inclined at an angle of between 40° and 50° to the inner periphery of the casing. The gripping surface 42 is machined at a complementary angle such that the width of the gripping surface in an axial direction is greater than the thickness of the sheet. The radially outermost edge 43 of each gripping ring is in contact with the inner periphery of the casing. The axially outermost gripping rings are prevented from being pulled out of the casing by the flanges 19, with the outermost surfaces of these rings sitting in the angles 44 between the flanges 19 and the web portion of the casing.

The remaining gripping rings are confined to the spaces between the sealing gasket 30 and axially outermost gripping rings.

The inner diameter of each gripping ring 40 is no less than the minimum inner diameter of the sealing gasket 30. This ensures that the gripping rings 40 do not engage the periphery of a pipe before the ribs 32 of the sealing gasket 30.

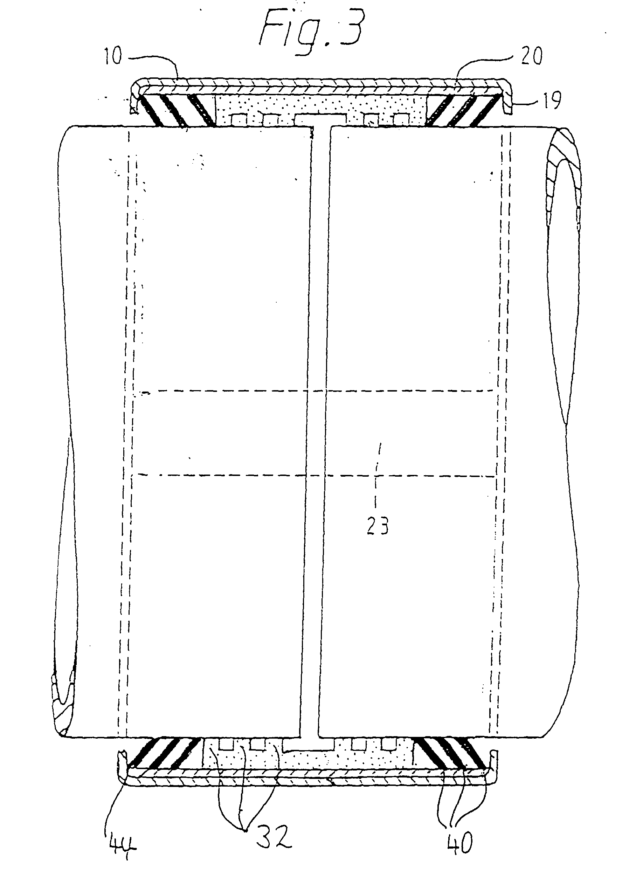

In use the ends of two plain ended pipes are inserted into the coupling from opposite ends as shown in figure 3. A space of say 10mm may be left between the pipe ends to allow for angular deflection, or to avoid abrasive wear, or to dampen vibration. With the coupling in place, the screws 17 are tightened to clamp the coupling to the pipes. As the screws 17 are tightened, the loops 15 of the outer casing 10 are drawn together, thereby applying a radially compressive force to the outer casing. The inner casing is arranged so that its longitudinal gap 23 is diametrically opposite the longitudinal gap 13 in the outer casing. In this way the inner casing supports the gasket in the region of the gap 13 where there is no support from the outer casing. The inner casing is dimensioned so that when the coupling is tightened around the pipe ends, only a small longitudinal gap 23 remains.

The tightening of the tensioning screws 17 presses the annular sealing ribs 32 into sealing contact with the outer surface of the pipe ends, the sealing ribs deforming easily due to their height, width and the grade of material used. At the same time, the gripping rings 40 are urged into contact with the outer surfaces of the pipes. The compression of the gripping rings 40 forces the gripping surfaces 42 into intimate contact with the pipe surfaces, ideally around the entire circumference. The gripping rings penetrate the surfaces of the pipes by a small amount, penetration being kept to a minimum because the gripping force is spread over a large area.

Preferably the gripping ring does not penetrate the pipe surface further than the depth of the milling, knurling or roughening of its inner surface which is determined at the point of manufacture to give the desired maximum bite on the pipe and typically is not more than 10% of its wall thickness.

The gripping rings 40 operate independently of the sealing gasket 30. Any axial loading placed on the assembly tending to pull the pipes out of the coupling will be resisted by the gripping rings 40. Under such loading, each ring 40 will flex to allow some axial movement of the respective gripping surface relative to the casings 20 and 30. On flexing, the difference in spacing between the inner and outer diameters of each gripping ring 40 will increase, bringing about a corresponding increase in the gripping force on the pipe surface. If the axial loading drops for any reason, the rings 40 will flex back towards their initial positions and the gripping force will fall to match the new load conditions.

In principle, the gripping force on the pipe surface can continue to increase up to the point where the gripping rings become perpendicular to the inner periphery of the casing. Once the gripping rings have turned back on themselves, beyond the threshold angle of 90°, the pipe will be able to slip out of the coupling. However, very considerable forces must be applied before the coupling will fail in this manner.

When the tensioning arrangement is untightened, the inherent resilience of the gripping rings 40 and sealing gasket 30 will ensure that the clamping and sealing arrangements will release themselves and the coupling will be ready for re-use.

Although the invention has been described in relation to a coupling for joining pipes of equal diameter it will be appreciated that it can be modified to form a stepped coupling asymmetric configuration for joining pipes of unequal diameter. Suitable modifications are described in our patent specification GB-A-2 249 366. Furthermore, although the invention has been described in relation to a coupling for joining pipes of similar materials, it will be understood that the coupling can be modified for use with pipes of dissimilar materials. For example, a hybrid coupling having, at one end, a gripping ring arrangement in accordance with this invention and, at the other end, a gripping ring in accordance with our aforementioned application can be used to join a polyethylene pipe to a steel pipe.

In an alternative embodiment, not shown, the gripping devices at each end of the coupling are helical instead of circular. It will be appreciated that a helical gripping ring with three complete turns will provide much the same, if not a better, distribution of the gripping force as three separate circular gripping rings.

Although the gripping rings are shown spaced axially apart in the drawings, in practice the gripping rings or the turns of the helical gripping ring may be bunch together so as to bear against one another. The spaces that may be formed between the axial innermost ring and the sleeve or the spaces between the flanges 19 and the axial outermost ring may be filled with spacers to prevent the rings flexing inwardly and relieving the pressure of the gripping surfaces on the pipe when the pipes are pushed inwardly towards one another.

## Claims

1. A pipe coupling for connecting in a fluid-tight manner to the end of a pipe, comprising: a casing (10, 20) having an inwardly directed flange (19) at at least one of its ends; a tubular sealing sleeve (30) located within the casing (10); a gripping ring (40) located inside the casing, the radially outermost surface (43) of the gripping ring being in contact with the inner periphery of the casing (10, 20) adjacent the flange (19), the gripping ring (40) having an inner periphery (42) to grip the pipe, the gripping inner periphery being axially inward of the area of the said contact of the gripping ring with the casing (10, 20), the gripping ring being free to flex to allow axial movement of the gripping inner periphery (42) relative to the casing; and tensioning means (17) for tightening the casing (10, 20) around the sleeve (30) and gripping ring (40); the arrangement being such that, in use, tightening the tensioning means (17) presses the sleeve into sealing engagement with the pipe and urges the inner gripping periphery (42) into contact with the pipe, and the gripping ring (40) flexes in such a way as to increase the gripping force in response to axial tension between the coupling and the pipe, characterised in that the inner periphery of the gripping ring (40) has a surface (42) which is generally cylindrical.

2. A coupling according to claim 1 for coupling together two pipes in a fluid-tight manner, in which both ends of the casing have a flange (19), there being a gripping ring (40) adjacent each flange.

3. A pipe coupling according to claim 1 or 2 in which the radially innermost surface of the sealing sleeve (30) is flush with or projects radially inward of the gripping surface (42) of the gripping ring prior to tightening the tensioning means.

4. A coupling according to any preceding claim in which the gripping ring is frusto-conical.

5. A coupling according to any preceding claim in which the gripping ring is an incomplete ring.

6. A coupling according to any preceding claim further comprising at least one other gripping ring (40), the at least one other gripping ring being located axially inward and adjacent first-mentioned gripping ring.

7. A coupling according to any of claims 1 to 3 in which the gripping ring is helical and has more than one full turn.

8. A coupling according to any preceding claim in which the gripping ring is formed from sheet material, the gripping surface (42) being set at an angle to the surface of the sheet such that the width of the gripping surface in an axial direction is greater than the thickness of the sheet.

9. A pipe coupling according to any preceding claim in which the gripping surface (42) is roughened to increase friction forces when in contact with the pipe.

10. An assembly of a pipe coupling connected in a fluid-tight manner to the end of a pipe, the pipe coupling comprising: a casing (10, 20) having an inwardly directed flange (19) at at least one end; a tubular sealing sleeve (30) located within the casing (10, 20): a gripping ring (40) located inside the casing (10, 20), the radially outermost surface (43) of the gripping ring being in contact with the inner periphery of the casing (10, 20) adjacent the flange (19), the gripping ring (40) having an inner edge to grip the surface of the pipe, the gripping edge being axially inward of the area of the said contact of the gripping ring (40) with the casing (10, 20), the gripping ring being free to flex to allow axial movement of the gripping edge relative to the casing; and tensioning means (17) for tightening the casing (10, 20) around the sleeve (30) and gripping ring (40); the coupling being arranged such that the sleeve (30) is pressed into sealing engagement with the pipe and the gripping edge is urged into contact with the pipe when the tensioning means (17) is tightened, and such that the gripping ring (40) flexes in such a way as to increase the gripping force in response to axial tension between the coupling and the pipe, characterised in that the gripping edge has a surface (42) which is generally cylindrical.

11. An assembly according to claim 10 in which the gripping surface and the sealing sleeve are in contact with the pipe at circumferential locations of substantially equal radii.

12. An assembly according to claim 10 or 11 in which the pipe coupling is in accordance with any of claims 2 to 19.

## Patentansprüche

1. Rohrkupplung zum fluiddichten Anschließen an das Ende eines Rohres, die Folgendes umfasst: ein Gehäuse (10, 20) mit einem nach innen gerichteten Flansch (19) an wenigstens einem seiner Enden [sic ...*1]; eine in dem Gehäuse (10) angeordnete röhrenförmige Dichtungsmuffe (30), einen innen im Gehäuse angeordneten Einspannring (40), wobei die radial äußerste Oberfläche (43) des Einspannrings an den Flansch (19) angrenzend mit dem inneren Umfang des Gehäuses (10, 20) in Berührung ist, wobei der Einspannring (40) einen inneren Umfang (42) zum Einspannen des Rohrs hat, wobei sich der einspannende innere Umfang von dem Bereich der genannten Berührung des Einspannrings mit dem Gehäuse (10, 20) axial innen liegend befindet, wobei sich der Einspannring frei biegen kann, um axiale Bewegung des einspannenden inneren Umfangs (42) im Verhältnis zum Gehäuse zuzulassen, und Spannmittel (17) zum Anziehen des Gehäuses (10, 20) um die Muffe (30) und den Einspannring (40) herum, wobei die Anordnung dergestalt ist, dass das Anziehen des Spannmittels (17) im Gebrauch die Muffe in Dichtungseingriff mit dem Rohr presst und die innere Einspannoberfläche (42) mit dem Rohr in Berührung drängt und dass der Einspannring (40) sich so biegt, dass die Einspannkraft in Reaktion auf axiale Spannung zwischen der Kupplung und dem Rohr vergrößert wird, dadurch gekennzeichnet, dass der innere Umfang des Einspannrings (40) eine Oberfläche (42) hat, die allgemein zylindrisch ist.

2. Kupplung nach Anspruch 1 zum fluiddichten Kuppeln von zwei Rohren aneinander, bei der beide Enden des Gehäuses einen Flansch (19) haben, wobei sich an jeden Flansch angrenzend ein Einspannring (40) befindet.

3. Rohrkupplung nach Anspruch 1 oder 2, bei der die radial innerste Oberfläche der Dichtungsmuffe (30) vor dem Anziehen des Spannmittels mit der Einspannfläche (42) des Einspannrings bündig ist oder von ihr radial nach innen vorsteht.

4. Kupplung nach einem der vorangehenden Ansprüche, bei der der Einspannring kegelstumpfförmig ist.

5. Kupplung nach einem der vorangehenden Ansprüche, bei der der Einspannring ein unvollständiger Ring ist.

6. Kupplung nach einem der vorangehenden Ansprüche, die des Weiteren wenigstens einen anderen Einspannring (40) aufweist, wobei der wenigstens eine andere Einspannring von dem zuerst erwähnten Einspannring axial innen liegend und an ihn angrenzend angeordnet ist.

7. Kupplung nach einem der Ansprüche 1 bis 3, bei der der Einspannring schraubenartig ist und mehr als eine volle Windung hat.

8. Kupplung nach einem der vorangehenden Ansprüche, bei der der Einspannring aus Blechmaterial geformt ist, wobei die Einspannfläche (42) in einem Winkel zur Oberfläche des Blechs angeordnet ist, so dass die Breite der Einspannfläche in einer axialen Richtung größer ist als die Dicke des Blechs.

9. Rohrkupplung nach einem der vorangehenden Ansprüche, bei der die Einspannfläche (42) zum Vergrößern von Reibungskräften, wenn mit dem Rohr in Berührung, gerauht ist.

10. Baugruppe einer fluiddicht an das Ende eines Rohres angeschlossenen Rohrkupplung, wobei die Rohrkupplung Folgendes umfasst: ein Gehäuse (10, 20) mit einem nach innen gerichteten Flansch (19) an wenigstens einem Ende; eine in dem Gehäuse (10, 20) angeordnete röhrenförmige Dichtungsmuffe (30), einen innen im Berührung des Einspannrings (40) mit dem Gehäuse (10, 20) axial innen liegend befindet, wobei sich der Einspannring frei biegen kann, um axiale Bewegung des Einspannrands im Verhältnis zum Gehäuse zuzulassen, und Spannmittel (17) zum Anziehen des Gehäuses (10, 20) um die Muffe (30) und den Einspannring (40) herum, wobei die Kupplung dergestalt angeordnet ist, dass, wenn das Spannmittel (17) angezogen wird, die Muffe (30) in Dichtungseingriff mit dem Rohr gepresst und der Einspannrand mit dem Rohr in Berührung gedrängt wird und dass der Einspannring (40) sich so biegt, dass die Einspannkraft in Reaktion auf axiale Spannung zwischen der Kupplung und dem Rohr vergrößert wird, dadurch gekennzeichnet, dass der Einspannrand eine Oberfläche (42) hat, die allgemein zylindrisch ist.

11. Baugruppe nach Anspruch 10, bei der die Einspannfläche und die Dichtungsmuffe an Umfangsstellen wesentlich gleicher Radien mit dem Rohr in Berührung sind.

12. Baugruppe nach Anspruch 10 oder Anspruch 11, bei der die Rohrkupplung den Ansprüchen 2 bis 19 gemäß ist.

## Revendications

1. Raccord de tuyau destiné à se raccorder de manière étanche aux fluides à l'extrémité d'un tuyau, comprenant : un tubage (10, 20) ayant une bride dirigée vers l'intérieur (19) au niveau d'au moins une de ses extrémités ; une chemise d'étanchéité tubulaire (30) située à l'intérieur du tubage (10) ; un anneau de serrage (40) situé à l'intérieur du tubage, la surface la plus externe radialement (43) de l'anneau de serrage étant en contact avec la périphérie interne du tubage (10, 20) adjacente à la bride (19), l'anneau de serrage (40) ayant une périphérie interne (42) pour serrer le tuyau, la périphérie interne de serrage étant axialement vers l'intérieur de la zone dudit contact de l'anneau de serrage avec le tubage (10, 20), l'anneau de serrage étant libre de fléchir pour permettre un mouvement axial de la périphérie interne de serrage (42) relativement au tubage ; et un moyen de tension (17) pour serrer le tubage (10, 20) autour de la chemise (30) et de l'anneau de serrage (40); l'agencement étant tel qu'en cours d'utilisation, le serrage du moyen de tension (17) presse la chemise en un engagement hermétique avec le tuyau et force la périphérie de serrage interne (42) en contact avec le tuyau, et l'anneau de serrage (40) fléchit de manière à augmenter la force de serrage en réponse à la tension axiale entre le raccord et le tuyau, caractérisé en ce que la périphérie interne de l'anneau de serrage (40) a une surface (42) qui est de manière générale cylindrique.

2. Raccord selon la revendication 1, pour raccorder ensemble deux tuyaux d'une manière étanche aux fluides, dans lequel les deux extrémités du tubage comportent une bride (19), avec un anneau de serrage (40) adjacent à chaque bride.

3. Raccord selon la revendication 1 ou 2, dans lequel la surface radialement la plus interne de la chemise d'étanchéité (30) est à niveau avec ou saille radialement vers l'intérieur de la surface de serrage (42) de l'anneau de serrage avant le serrage du moyen de tension.

4. Raccord selon l'une quelconque des revendications précédentes, dans lequel l'anneau de serrage est tronconique.

5. Raccord selon l'une quelconque des revendications précédentes, dans lequel l'anneau de serrage est un anneau incomplet.

6. Raccord selon l'une quelconque des revendications précédentes, comprenant en outre au moins un autre anneau de serrage (40), l'au moins un autre anneau de serrage étant situé axialement vers l'intérieur et à proximité du premier anneau de serrage mentionné.

7. Raccord selon l'une quelconque des revendications 1 à 3, dans lequel l'anneau de serrage est hélicoïdal et comporte plus d'un tour.

8. Raccord selon l'une quelconque des revendications précédentes, dans lequel l'anneau de serrage est formé à partir d'une matière en feuille, la surface de serrage (42) étant orientée à un certain angle par rapport à la surface de la feuille de telle sorte que la largeur de la surface de serrage dans un sens axial soit supérieure à l'épaisseur de la feuille.

9. Raccord selon l'une quelconque des revendications précédentes, dans lequel la surface de serrage (42) est rendue rugueuse afin d'augmenter les forces de frottement lors du contact avec le tuyau.

10. Ensemble d'un raccord de tuyau raccordé de manière étanche aux fluides à l'extrémité d'un tuyau, le raccord de tuyau comprenant : un tubage (10, 20) ayant une bride dirigée vers l'intérieur (19) au niveau d'au moins une extrémité ; une chemise d'étanchéité tubulaire (30) située à l'intérieur du tubage (10, 20) ; un anneau de serrage (40) situé à l'intérieur du tubage (10, 20), la surface la plus externe radialement (43) de l'anneau de serrage étant en contact avec la périphérie interne du tubage (10, 20) adjacente à la bride (19), l'anneau de serrage (40) ayant un bord interne pour serrer la surface du tuyau, le bord de serrage étant axialement vers l'intérieur de la zone dudit contact de l'anneau de serrage (40) avec le tubage (10, 20), l'anneau de serrage étant libre de fléchir pour permettre un mouvement axial du bord de serrage relativement au tubage ; et un moyen de tension (17) pour serrer le tubage (10, 20) autour de la chemise (30) et de l'anneau de serrage (40) ; le raccord étant agencé de telle sorte que la chemise (30) soit pressée en un engagement hermétique avec le tuyau et que le bord de serrage soit forcé en contact avec le tuyau quand le moyen de tension (17) est serré, et de telle sorte que l'anneau de serrage (40) fléchisse de manière à augmenter la force de serrage en réponse à la tension axiale entre le raccord et le tuyau, caractérisé en ce que le bord de serrage a une surface (42) qui est de manière générale cylindrique.

11. Ensemble selon la revendication 10, dans lequel la surface de serrage et la chemise d'étanchéité sont en contact avec le tuyau au niveau d'emplacements circonférentiels de rayons sensiblement égaux.

12. Ensemble selon la revendication 10 ou 11, dans lequel le raccord de tuyau est conforme à l'une quelconque des revendications 2 à 19.
